# EUROPEAN PATENT APPLICATION

(11) **EP 4 635 818 A1**
(43) Date of publication of application: **22.10.2025**
(21) Application number: 24170349.5
(22) Date of filing: 15.04.2024
(51) Int. Cl.: B60W 50/029, B60W 50/038, B60W 60/00, B60W 30/188, B60K 28/10

(54) **FUNCTIONAL SAFETY IN LONGITUDINAL CONTROL SYSTEMS**

(71) Applicant: Bayerische Motoren Werke Aktiengesellschaft, 80809 München (DE)
(72) Inventor: Ripp, Michael, 86316 Friedberg (DE); Bonfigt, Martin, 84069 Schierling (DE); Kumar, Sunil, 85716 Unterschleißheim (DE); Spichtinger, Thomas, 81669 München (DE); Ziener, Robert, 84034 Landshut (DE); Stuerzer, Julian, 85604 Zorneding (DE)

(57) **Abstract**

The present disclosure relates to performing an ADS feature. An acceleration of the vehicle is controlled based on automotive sensor data and a planned acceleration using a control system.

The control system comprises a first set of control components (221) having a first ASIL and a second set of control components (211, 212, 223) having a second ASIL, the first ASIL being lower than the second ASIL.

An acceleration deviation caused by the first set of control components is detected based on the automotive sensor data. Finally, if the acceleration deviation is detected, a safe acceleration state is determined using the second set of control components, wherein the safe acceleration state is selected from a set of safe acceleration states based on the automotive sensor data, the set comprising at least a maximum deceleration, a reduced deceleration and a reduced acceleration.

## Description

### TECHNICAL FIELD

The invention generally relates to ensuring functional safety when controlling a vehicle and more precisely to ensuring functional safety when performing longitudinal control of a vehicle as part of an Automated Driving System (ADS) feature.

### BACKGROUND

ADS features of a modern vehicle need to control the movement of the vehicle in a manner ensuring functional safety in the sense of ISO Standard 26262:2018. To this end, each ADS feature needs to comply with an automotive safety integrity level (ASIL) required for the functionality of the ADS feature. Each ADS feature is implemented by a system comprising a set of components, which accordingly needs to comply with the required ASIL. However, some of the individual components of the system may only comply with a lower ASIL but not the required ASIL. Thus, the system implementing a given ADS feature needs to ensure the required ASIL despite some components not complying with the required ASIL. To achieve this, the system needs to identify incorrect control decisions of the components having a lower ASIL and to take mitigating control decisions. In the context of a system implementing longitudinal control as a part of an ADS feature, such mitigating decisions need to determine an appropriate acceleration of the vehicle once incorrect control decisions of the components having the lower ASIL are identified. However, such mitigating decisions need to determine a safe acceleration of the vehicle once incorrect control decisions are determined.

Therefore, it is an objective of the present disclosure to determine a safe acceleration in a system performing longitudinal control of a vehicle as part of an ADS feature upon determination of incorrect control decisions of components not complying with the required ASIL level.

### SUMMARY OF THE INVENTION

To achieve this objective, the present disclosure provides a method for performing an ADS feature, which enables a vehicle to provide at least conditional driving automation, comprises controlling an acceleration of the vehicle using a control system based on automotive sensor data obtained by one or more automotive sensors of the vehicle and a planned acceleration. The control system comprises a first set of control components having a first ASIL and a second set of control components having a second ASIL, the first ASIL being lower than the second ASIL. The method further comprises detecting an acceleration deviation caused by the first set of control components based on the automotive sensor data. Finally, the method comprises determining a safe acceleration state using the second set of control components if the acceleration deviation is detected, wherein the safe acceleration state is selected from a set of safe acceleration states based on the automotive sensor data, the set comprising at least a maximum deceleration, a reduced deceleration and a reduced acceleration.

The present disclosure further provides an automotive control unit comprising at least one processing unit and a memory coupled to the at least one processing unit and configured to store machine-readable instructions. The machine-readable instructions cause the at least one processing unit to implement a control system configured to control an acceleration of a vehicle comprising a first set of control components having a first ASIL and a second set of control components having a second ASIL, the first ASIL being lower than the second ASIL. The machine-readable instructions cause the at least one processing unit to control the acceleration of the vehicle using the control system based on automotive sensor data obtained by one or more automotive sensors of the vehicle and a planned acceleration, detect an acceleration deviation caused by the first set of control components based on the based on automotive sensor data and determine a safe acceleration state using the second set of control components if the acceleration deviation is detected, wherein the safe acceleration state is selected from a set of safe acceleration states based on the automotive sensor data, the set comprising at least a maximum deceleration, a reduced deceleration and a reduced acceleration

The present disclosure further provides a vehicle comprising a plurality of sensors, and the automotive control unit.

### BRIEF DESCRIPTION OF THE DRAWINGS

Examples of the present disclosure will be described with reference to the following appended drawings, in which like reference signs refer to like components.
FIG. 1 provides a flowchart of a method for performing an ADS feature according to examples of the present disclosure.
FIG. 2 provides a block diagram of a control system configured to control an acceleration of a vehicle according to examples of the present disclosure.
FIG. 3 illustrates a vehicle including a plurality of automotive sensors according to examples of the present disclosure.
FIG. 4 illustrates an automotive control unit according to examples of the present disclosure.

It should be understood that the above-identified drawings are in no way meant to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

### DETAILED DESCRIPTION

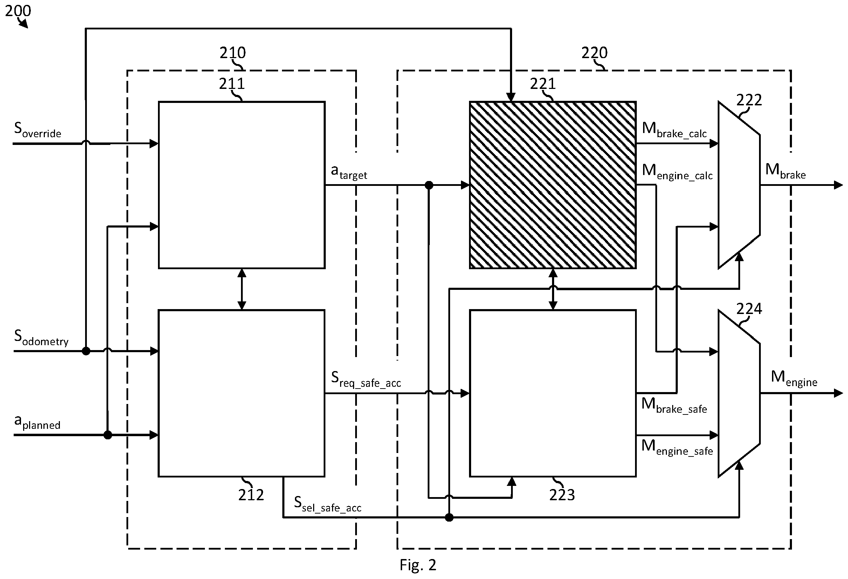

The present disclosure generally provides an automotive control unit, vehicle and method configured to perform an ADS feature which enables the vehicle to provide at least conditional driving automation. More precisely, the present disclosure enables an ADS feature using a control system, such as exemplary control system 200 illustrated in Fig. 2, which receives a planned acceleration a_{planned}, i.e. an acceleration determined by one or more driving automation system (DAS) features of the vehicle, and translates planned acceleration a_{planned} into the torque to be applied by the brakes and/or the engine, i.e. brake torque M_{brake} and engine torque M_{engine}. It will be understood that the expression moment may be used throughout the present disclosure interchangeably with the expression torque.

In the context of the present disclosure, DAS features refer to features performing aspects of the driving automation of a vehicle regardless of the level of driving automation according to the driving automation taxonomy defined in standard J3016 of SAE International. By contrast, ADS features in the context of the present disclosure refer to features performing aspects of the driving automation of a vehicle corresponding to at least level 3 according to the driving automation taxonomy defined in standard J3016 of SAE International.

Control system 200 comprises control components, as illustrated by the various elements shown in Fig. 2, which in the example of Fig. 2 have two different ASIL. The fact that the control components of control system 100 have different ASIL is illustrated by patterned control component 121, which has a lower ASIL than the other control components of control system 100. The higher ASIL of the control components of control system 100 corresponds to the ASIL which control system 100 needs to comply with.

Control system 200 receives odometry signal S_{odometry}, which may include odometry data of the vehicle and may e.g. be indicative of the current acceleration, an acceleration deviation, a velocity and/or a position deviation of the vehicle 300. Based on odometry signal S_{odometry}, control system 200 detects an acceleration deviation, i.e. a deviation between planned acceleration a_{planned} and the current acceleration of the vehicle. If control system 200 deems the acceleration deviation to exceed e.g. a specification or the standard control capabilities of control system 100, control system switches to determining a safe acceleration state in order to maintain compliance with the required ASIL of control system 200 and to thereby ensure the functional safety of control loop 100.

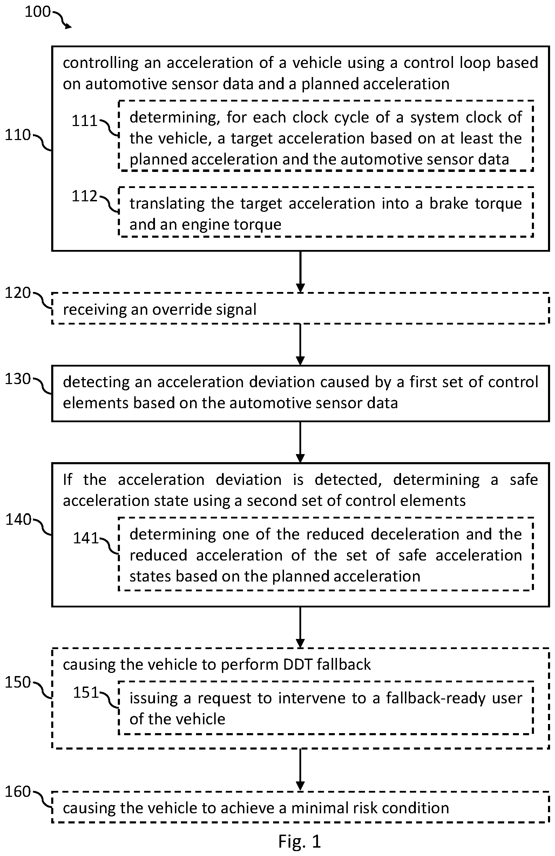

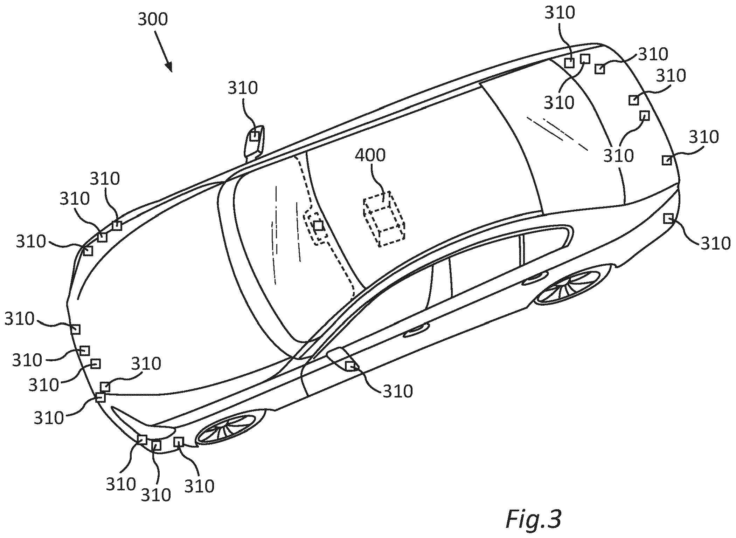

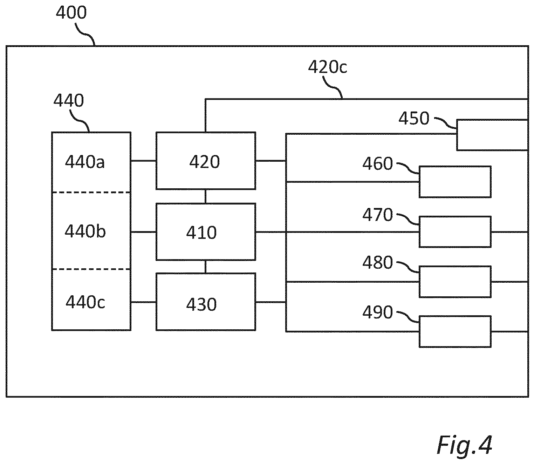

This general concept will now be explained with reference to the appended drawings, with Fig. 1 providing a flowchart of the method for performing an ADS feature and Fig. 2 providing a block diagram of control system 200. Fig. 3 illustrates the vehicle including the plurality of automotive sensors and the automotive control unit. Finally, Fig. 4 illustrates an example of the automotive control unit in more detail.

It will be understood that dashed boxes in Fig. 1 illustrate optional steps of method 100.

Method 100 is configured to perform an ADS feature enabling a vehicle, such as vehicle 300 of Fig. 3, to provide at least conditional driving automation.

Turning briefly to Fig. 3, vehicle 300 and more generally the expression vehicle in the context of the present disclosure, refers to any kind of motor vehicle configured to transport people and/or freight. The motor of vehicle 300 may be any kind of motor, such as an electric motor or an internal combustion engine. Vehicle 300 may e.g. be a passenger vehicle as shown in Fig. 2. It will however be understood that vehicle 300 may also be a bus, a truck or any other kind of vehicle including one or more sensors 310 and an automotive control unit 300 enabling vehicle 300 to provide at least conditional driving automation. In other words, automotive control unit 300 and one or more sensors 310 may be configured to enable vehicle 300 to provide vehicle control functionality capable of at least conditional driving automation, i.e. level 3 of the driving automation taxonomy defined in standard J3016 of SAE International. That is, vehicle 300 may be configured to provide at least one ADS performing the entire dynamic driving task (DDT) based on automotive sensor data provided by one or more sensors 310 in a sustained and operational design domain (ODD) specific manner under routine/normal operation with the user of vehicle 300 serving as a DDT fallback-ready user if requested to take over the DDT by the ADS or in case of DDT performance-relevant system failures in other vehicle systems.

ODD in the context of the present disclosure refers to the operating conditions under which a given DAS feature is specifically designed to function, including, but not limited to, environmental, geographical, and time-of-day restrictions, and/or the requisite presence or absence of certain traffic or roadway characteristics.

The DDT in the context of the present disclosure includes all real-time operational and tactical functions required to operate vehicle 300 in on-road traffic, excluding the strategic functions such as trip scheduling and selection of destinations and waypoints. In the context of the DDT, DDT fallback refers to either the DDT-fallback-ready user taking over the performance of the DDT or the ADS feature or the DDT-fallback-ready user achieving a minimal risk condition, i.e. a stable, stopped condition of vehicle 300, after occurrence of a DDT performance-relevant system failure or upon exiting the ODD.

It will be understood that vehicle 300 may be configured to enable higher levels of driving automation, such as high driving automation, i.e. level 4 or higher of the driving automation taxonomy defined in standard J3016 of SAE International.

It will be understood that, given the ODD specificity of the ADS feature performed by method 100, vehicle 300 may perform DAS features having higher or lower levels of automation outside of the ODD of the ADS feature performed by method 100.

The one or more sensors 310 are configured to capture automotive sensor data indicative of the environment of vehicle 300. Accordingly, the automotive sensor data provide environmental awareness to the one or more vehicle control modules and thereby to vehicle 300 in order to enable at least driver assistance. For example, the automotive sensor data captured by the one or more sensors 310 may provide vehicle 300 with information on the position and size of other vehicles, road surface markings or traffic signs. To this end, the one or more sensors 310 may be radar sensors, which may be configured to emit radio waves in order to determine a distance, an angle and a velocity of objects around the vehicle based on the reflected radio waves. The one or more sensors 310 may be light detection and ranging (LIDAR) sensors, which are configured to emit laser beams in order to determine a distance, an angle and a velocity of objects around vehicle 300 based on the reflected laser beams. The one or more sensors 310 may be cameras, which capture images of the environment of the vehicle. The one or more sensors 310 may be thermographic cameras, which capture images of the environment of vehicle 300 based on infrared radiation. It will be understood that LIDAR sensors, radar sensors or cameras are merely provided as examples of sensor types of the one or more sensors 310. For example, the one or more sensors 310 may also be ultrasonic sensors. The one or more sensors 310 may be global navigation satellite system (GNSS) sensors configured to receive positional data, such as satellite signals, for determining the position of vehicle 200. More generally, the one or more sensors 310 may be any type of sensor capable of capturing automotive sensor data indicative of the environment of vehicle 300. Further, the one or more sensors 310 may additionally be any type of sensor capable of capturing odometry data, such as speed and acceleration, of vehicle 300. This capturing capability may be integrated into the sensor types discussed above or may be provided by dedicated motion sensors. It will further be understood that the one or more sensors 310 may include multiple sensors of various types of sensors. Further, the one or more sensors 310 of the same type may exhibit different properties, e.g. by being configured to capture sensor data at different ranges, such as a close range, a middle range and a far range. For example, vehicle 300 may include three close range radar sensors each at a front and a back of vehicle 300, a middle range to far range radar sensor at the back of vehicle 200, a LIDAR sensor at the front of vehicle 300, a rear-facing camera at the back of vehicle 200, a front-facing camera at the front of the vehicle, a front-facing camera at the rear-view mirror and a rear-facing close range to middle range radar sensor in each door-mounted outer rear view mirror. It will be understood that vehicle 300 may include more or fewer automotive sensors than shown in Fig. 3 and discussed in the above example.

In step 110, method 100 controls an acceleration of vehicle 300 using control system 200 of Fig. 2 based on planned acceleration a_{planned} and the automotive sensor data obtained by the one or more automotive sensors 310 discussed above. In other words, method 100 controls the longitudinal movement of vehicle 300 as part of the ADS feature while the lateral movement of the ADS feature is controlled by other systems of vehicle 300. For example, method 100 may control the acceleration of vehicle 300 as part of the implementation of a controlled-access highway cruise feature, i.e. a feature providing level 3 driving automation on controlled-access highways up to a specified travel speed, such as 60 km/h, 90 km/h or 120 km/h.

Planned acceleration a_{planned} may indicate an acceleration to be performed by vehicle 300 during a planning horizon duration. That is, planned acceleration a_{planned} may be determined by an acceleration determination module coupled to control system 200 for each clock cycle of a system clock, such as the clock of one of the processing units discussed below with reference to Fig. 4. The acceleration determination module may be any kind of DAS feature which is configured to determine planned acceleration a_{planned} based on a model of the driving environment of vehicle 300 derived from the automotive sensor data, i.e. the acceleration vehicle 300 should perform based on the driving environment. Acceleration determination module may determine planned acceleration a_{planned} for a planning horizon, i.e. a time frame for which planned acceleration a_{planned} may be deemed to be constant based on the driving environment or a pre-determined time frame for which the acceleration determination module may determine planned acceleration a_{planned}. For example, the planning horizon may be in a range of 1s to 10s. While planned acceleration a_{planned} may be determined for the planning horizon, it may nonetheless be redetermined each clock cycle. That is, acceleration determination module may determine each clock cycle, which may be in the range of ms or ns, what the acceleration of vehicle 300 should be for e.g. the next 2s or 5s. In other words, planned acceleration a_{planned} may correspond to the acceleration vehicle 300 should exhibit for a time frame into the future updated at time intervals which are shorter than the time frame for which vehicle 300 should exhibit this acceleration.

It will be understood that in order to indicate the planned acceleration to be performed by the vehicle, planned acceleration a_{planned} may include a plurality of planned vehicle parameters, which may include a planned velocity and a planned position at a planned time as well as any other parameter which may be planned with regard to the longitudinal movement control performed by method 100. To this end, planned acceleration a_{planned} may also be considered a trajectory vector v_{trajectory}, which may include any number of planed vehicle parameters.

Control system 200 comprises a first set of control components having a first ASIL and a second set of control components having a second ASIL. The first ASIL is lower than the second ASIL. In the context of the present disclosure, component may refer to one or more hardware parts and/or software units which perform a logically separable function within the performance of the ADS feature. An ASIL in the context of the present disclosure refers to requirements a given component needs to fulfill and safety measures the given component needs to implement in order to avoid unreasonable risk, i.e. in order to provide the required functional safety in the sense of standard ISO 26262:2018. Accordingly, the components of control system 200 may have an ASIL from level quality management (QM) to level D, with level QM denoting the lowest ASIL and level D denoting the highest ASIL. It will thus be understood that in the context of the present disclosure, QM is considered an ASIL. Control system 200 will be discussed in the following with regard to Fig. 2.

Fig. 2 shows an exemplary control system 200, which includes acceleration control 210 and torque control 220, which constitute control components of control system 200 and thus respectively represent a logically separable function as discussed above. It will be understood that any control components of control system 200 discussed in the following may be implemented by one or more hardware parts and/or software units and may further include sub-parts and/or sub-units. It will further be understood that any control components of control system 200 may implement additional functionality supplementing the functionality of these elements discussed in the following.

Acceleration control 210 may be configured to receive planned acceleration a_{planned} and the automotive sensor data, which in the example of Fig. 2 include at least odometry data S_{odome-try}. Acceleration control 210 may be configured to derive the instantaneous acceleration of vehicle 300 from the odometry data S_{odometry}. Based on the instantaneous acceleration derived from the automotive sensor data and the planned acceleration a_{planned}, acceleration control 210 may determine a target acceleration a_{target}, i.e. the instantaneous acceleration vehicle 300 should exhibit at a given point in time. That is, target acceleration a_{target} denotes the instantaneous acceleration vehicle 300 should exhibit in order to achieve the planned acceleration a_{planned} in view of the instantaneous acceleration vehicle 300. In summary, acceleration control 210 may thus take planned acceleration a_{planned} and the automotive sensor data to determine target acceleration a_{target}.

To implement this functionality, acceleration control 210 may include target acceleration determination 211 and acceleration divergence determination 212. Acceleration divergence determination 212 may be configured to determine a divergence of the instantaneous acceleration of vehicle 300 from the planned acceleration a_{planned}, i.e. the difference between the two accelerations. The determination of the divergence may further take into account the divergence between other planned vehicle parameters and the corresponding derives instantaneous vehicle parameters if a_{planned} includes further planned vehicle parameters as discussed above. Acceleration divergence determination 212 may thus be configured to receive at least odometry data S_{odometry} from automotive sensors 310 and planned acceleration a_{planned} from the acceleration determination module. Acceleration divergence determination 212 may further be configured to provide the determined divergence to target acceleration determination 211, which may be configured to determine target acceleration a_{target} based on any kind of control scheme suitable to reduce the difference between the instantaneous acceleration of vehicle 300 and planned acceleration a_{planned} to a value of approximately zero.

Torque control 220 may receive target acceleration a_{target} and may be configured to translate target acceleration a_{target} into brake torque M_{brake} and engine torque M_{engine}. Thus, torque control 220 may be configured to determine control parameters of vehicle 300 impacting the acceleration of vehicle 300 in order to achieve planned acceleration a_{planned}. To implement this functionality, torque control 220 may include acceleration-to-torque translation 221, which may be configured to determine calculated brake torque M_{brake_calc} and calculated engine torque M_{en-gine_calc} based on at least odometry data S_{odometry} and target acceleration a_{target}. Calculated brake torque M_{brake_calc} and calculated engine torque M_{engine_calc} may be output by control system 200 as control parameters brake torque M_{brake} and engine torque M_{engine} as will be discussed below.

Acceleration-to-torque translation 221 may have a lower ASIL than the other control components of control system 200. For example, acceleration-to-torque translation 221 may comply with ASIL QM while the other control components of control system 200 comply with ASIL B. This fact is illustrated by the patterning of acceleration-to-torque translation 221. Accordingly, acceleration-to-torque translation 221 may correspond to the first set of control components having the first ASIL while the other control components of control system 200 of Fig. 2 may correspond to the second set of control components having the second ASIL, which may e.g. be ASIL B. In this example, control system 200 may thus need to comply with ASIL B. It will be understood that the number of components of the first and the second set shown in Fig. 2 are merely provided as an example and that the first set and the second set of control components may include any number of control components as required by the actual implementation of control system 200.

Based on the above discussion of control system 200, step 110 may include a step 111, in which method 100 may determine target acceleration a_{target} based on at least planned acceleration a_{planned} and the automotive sensor data, which may at least include odometry data S_{odometry}, for each clock cycle of the system clock of vehicle 300. This step may be performed by acceleration control 210, target acceleration determination 211 and acceleration divergence determination 212. Further, step 110 may include a step 112, in which method 100 may translate target acceleration a_{target} into brake torque M_{brake} and engine torque M_{engine}. Step 121 may be performed by torque control 220 and acceleration-to-torque translation 221.

In step 120, method 100 may receive an override signal S_{override}, which may cause the controlling of the acceleration to set the target acceleration a_{target} to a value indicated by the override signal. override signal S_{override} thus enables another DAS feature, such as the acceleration determination module discussed above, to set target acceleration a_{target} and thus the instantaneous acceleration vehicle 300 should exhibit regardless of control decisions taken by acceleration control 210, target acceleration determination 211 and acceleration divergence determination 212.

In step 130, method 100 detects an acceleration deviation caused by the first set of control components based on the automotive sensor data. In the context of example control system 200 of Fig. 2, acceleration control 210 and acceleration divergence determination 212 may detect that the instantaneous acceleration of vehicle 300 as derived from the automotive sensor data, i.e. at least odometry data S_{odometry}, deviates by more than a deviation threshold from planed acceleration a_{planned}. Since under the normal control operation of control system 200 discussed above, brake torque M_{brake} and engine torque M_{engine} may be determined by acceleration-to-torque translation 221, i.e. the control component of the first set of control components having the first and thus lower ASIL, the deviation is assumed to be caused by acceleration-to-torque translation 221. In other words, method 100 detects in step 130 that the control parameters of vehicle 300 determined by control system 200 in step 110 do not achieve planned acceleration a_{planned} due to e.g. a control issue or an error condition of the set of components having the first ASIL.

It will be understood that the detection of the acceleration deviation in step 130 may include the detection of the deviation of further vehicle parameters if planned acceleration a_{planned} / trajectory vector v_{trajectory} includes further planned vehicle parameters as discussed above.

In step 140, method 100 determines a safe acceleration state using the second set of control components if the acceleration deviation is detected in step 130. The safe acceleration state is selected from a set of safe acceleration states based on the automotive sensor data and comprises at least a maximum deceleration, a reduced deceleration and a reduced acceleration. In other words, if the vehicle control parameters brake torque M_{brake} and engine torque M_{engine} as determined by control system 200 based on the normal operation discussed above with regard to step 110 lead to the acceleration deviation, the second set of components having the second ASIL takes over the determination of vehicle control parameters brake torque M_{brake} and engine torque M_{engine} and determines a safe acceleration in order to ensure the functional safety of control system 200 and thus of the longitudinal control of the ADS feature performed by method 100.

The reduced deceleration and the reduced acceleration are reduced with regard to a deceleration or acceleration as determined by control system 200 under normal operation. That is, when the second set of components having the second ASIL takes over the determination of vehicle control parameters brake torque M_{brake} and engine torque M_{engine}, the normal determination of brake torque M_{brake} and engine torque M_{engine} discussed above with regard to step 110 may continue and may be taken into account for the determination of the safe acceleration state but may not be output to the brakes and the engine. Further, step 140 may include a step 141, in which method 100 may determine one of the reduced deceleration and the reduced acceleration of the set of safe acceleration states based on planned acceleration a_{planned}. In otherwords, the reduced deceleration and reduced acceleration may be determined when selecting the safe acceleration state by reducing the deceleration or the acceleration determined by the normal operation of control system 200, which may take into account planned acceleration a_{planned}. Further, the reduced deceleration and reduced acceleration may be determined based on one or more preset offsets with regard to the acceleration determined in step 110, which may be absolute or relative offsets and may depend on the magnitude of the acceleration deviation.

The maximum deceleration serves as a fallback safe acceleration state in order to achieve the minimal risk condition if any other acceleration states are deemed as insufficient to ensure the functional safety of control system 200 during the determination of the safe acceleration state in step 140.

To implement steps 140 and 141, control system 200 of Fig. 2 and more precisely torque control 220 may further include brake torque multiplexer 222, safe torque determination 223 and engine torque multiplexer 224.

Safe torque determination 223 may be configured to determine the safe acceleration state by selecting one of the safe acceleration states form the set of safe acceleration states and determining corresponding vehicle control parameters safe brake torque M_{brake_safe} and safe engine torque M_{engine_safe}. To this end, safe torque determination 223 may be configured to receive calculated brake torque M_{brake_calc} and calculated engine torque M_{engine_calc} from acceleration-to-torque translation 221 as indicated by the bidirectional connection between the two control components and may further be configured to receive safe acceleration request signal S_{req_safe_acc}. Safe acceleration request signal S_{req_safe_acc} may be generated by acceleration control 210 and acceleration divergence determination 212 in step 130 when detecting the acceleration deviation. Analogously, acceleration control 210 and acceleration divergence determination 212 may be configured to generate safe acceleration selection signal S_{req_safe_acc}. Safe acceleration selection signal S_{req_safe_acc} may cause brake torque multiplexer 222 and engine torque multiplexer 224 to output either calculated brake torque M_{brake_calc} and calculated engine torque M_{engine_calc} or safe brake torque M_{brake_safe} and safe engine torque M_{engine_safe} as brake torque M_{brake} and engine torque M_{engine}, depending on whether the acceleration deviation is detected in step 130 or not. In other words, safe acceleration selection signal S_{req_safe_acc} may serve as a select signal of brake torque multiplexer 222 and engine torque multiplexer 224 and may select safe brake torque M_{brake_safe} and safe engine torque M_{engine_safe} as the output based on the detection of the acceleration deviation in step 130.

Safe torque determination 223 may select and determine the safe acceleration state in accordance with the above discussion based on any kind of control scheme suitable to select and determine the safe acceleration state in a manner compliant with the ASIL of control system 200 and ensuring the functional safety of control system 200.

In step 150, method 100 may cause vehicle 300 to perform DDT fallback if as part of steps 130 and 140 and thus due to the acceleration deviation method 100 determines that a performance-relevant failure of control system 200 has occurred. If the ADS feature performed by method 100 provides level 3 driving automation, Step 150 may comprise a step 151, in which method 100 may issue a request to intervene to a fallback-ready user of vehicle 300. In higher levels of automation, DDT fallback may include entering a "limp-back-home" mode, which may cause vehicle 300 to continue slowly toward the destination or to drive slowly toward a maintenance facility

Finally, method 100 may include a step 160, in which method 100 may cause vehicle 300 to achieve the minimal risk condition. Method 100 may take this decision if e.g. maximum deceleration is selected in step 140 or if vehicle 300 is unable to continue driving due to the performance-relevant failure of control system 200.

In summary, method 200 performs longitudinal control as part of an ADS feature with control components of differing ASILs and ensures functional safety of vehicle 300 in case control components of lower ASILs fail by detecting acceleration deviations and determining corresponding safe acceleration states.

Fig. 4 shows automotive control unit 400 configured to perform method 100. Automotive control unit 400 may include a processor 410, a graphics processing unit (GPU) 420, automotive processing system 430, a memory 440, a removable storage 450, a storage 460, a cellular interface 470, a global navigation satellite system (GNSS) interface 480 and a communication interface 490.

Processor 410 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 410 may perform instructions causing automotive control unit 400 to perform method 200. Processor 410 may be directly coupled to any of the components of automotive control unit 400 or may be directly coupled to memory 430, GPU 420 and a device bus.

GPU 420 may be any kind of processing unit optimized for processing graphics related instructions or more generally for parallel processing of instructions. As such, GPU 420 may be configured to generate a display of information, such as ADAS information or telemetry data, to a driver of the vehicle, e.g. via a head-up display (HUD) or a display arranged within the view of the driver. GPU 420 may be coupled to the HUD and/or the display via connection 420C. GPU 420 may further perform at least a part of method 100 to enable fast parallel processing of instructions relating to method 100. It should be noted that in some embodiments, processor 410 may determine that GPU 420 need not perform instructions relating to method 200. GPU 420 may be directly coupled to any of the components of automotive control unit 400 or may be directly coupled to processor 410 and memory 430. In some embodiments, GPU 420 may also be coupled to the device bus.

Automotive processing system 430 may be any kind of system-on chip configured to provide trillions of operations per second (TOPS) in order to enable automotive control unit 400 to implement one or more ADAS while driving. Automotive processing system 430 may interface only with processor 410 or may interface with other devices via the system bus. Automotive processing system 430 may for example perform the instructions related to the one or more automotive sensor data processing modules and to the one or more vehicle control modules.

Memory 440 may be any kind of fast storage enabling processor 410, GPU 420 and automotive processing system 430 to store instructions for fast retrieval during processing of instructions as well as to cache and buffer data. Memory 440 may be a unified memory coupled to processor 410 and GPU 420 and automotive processing system 430 in order to enable allocation of memory 440 to processor 410, GPU 420 and automotive processing system 430 as needed. Alternatively, processor 410, GPU 420 and automotive processing system 430 may be coupled to separate processor memory 440a, GPU memory 440b and automotive processing system memory 440c.

Removable storage 450 may be a storage device which can be removably coupled with automotive control unit 400. Examples include a digital versatile disc (DVD), a compact disc (CD), a Universal Serial Bus (USB) storage device, such as an external SSD, or a magnetic tape. It should be noted that removable storage 450 may store data, such as instructions of method 200, automotive sensor data, intermediate data and/or vehicle control data or may be omitted.

Storage 460 may be a storage device enabling storage of program instructions and other data. For example, storage 460 may be a hard disk drive (HDD), a solid state disk (SSD) or some other type of non-volatile memory. Storage 460 may for example store the instructions of method 100, automotive sensor data, intermediate data and/or vehicle control data.

Removable Storage 450 and storage 460 may be coupled to processor 410 via the system bus. The system bus may be any kind of bus system enabling processor 410 and optionally GPU 420 as well as automotive processing system 430 to communicate with the other devices of automotive control unit 400. Bus 440 may for example be a Peripheral Component Interconnect express (PCIe) bus or a Serial AT Attachment (SATA) bus.

Cellular interface 470 may be any kind of interface enabling automotive control unit 400 to communicate via a cellular network, such as a 4G network or a 5G network.

GNSS interface 480 may be any kind of interface enabling automotive control unit 300 to receive positional data provided by a satellite network, such as the Global Positioning System (GPS), the Global Navigation Satellite System (GLONASS) or Galileo. The positional data may be one of the types of automotive sensor data in the context of the present disclosure.

Communications interface 490 may enable automotive control unit 400 to interface with external devices, either directly or via network. Communications interface 480 may for example enable automotive control unit 300 to couple to a wired or wireless network, such as Ethernet, Wifi, a Controller Area Network (CAN) bus or any bus system appropriate in vehicles. For example, automotive control unit 400 may be coupled to the one or more automotive sensors 310 to receive automotive sensor data.

Automotive control unit 400 may be integrated with vehicle 300, e.g. beneath the cabin, under the dashboard or in the trunk of vehicle 300.

The invention may further be illustrated by the following examples.

In an example, a method for performing an ADS feature, which enables a vehicle to provide at least conditional driving automation, comprises controlling an acceleration of the vehicle using a control system based on automotive sensor data obtained by one or more automotive sensors of the vehicle and a planned acceleration. The control system comprises a first set of control components having a first ASIL and a second set of control components having a second ASIL, the first ASIL being lower than the second ASIL. The method further comprises detecting an acceleration deviation caused by the first set of control components based on the automotive sensor data. Finally, the method comprises determining a safe acceleration state using the second set of control components if the acceleration deviation is detected, wherein the safe acceleration state is selected from a set of safe acceleration states based on the automotive sensor data, the set comprising at least a maximum deceleration, a reduced deceleration and a reduced acceleration.

In the example method, the planned acceleration may indicate an acceleration to be performed by the vehicle during a planning horizon duration, wherein the planned acceleration may be determined, for each clock cycle of the system clock, by an acceleration determination module coupled to the control system.

The example method may further comprise causing the vehicle to perform DDT fallback.

In the example method, the causing the vehicle to perform DDT fallback may comprise issuing a request to intervene to a fallback-ready user of the vehicle.

The example method may further comprise causing the vehicle to achieve a minimal risk condition.

In the example method, the controlling the acceleration may comprise determining, for each clock cycle of a system clock of the vehicle, a target acceleration based on at least the planned acceleration and the automotive sensor data and translating the target acceleration into a brake torque and an engine torque.

The example method may further comprise receiving an override signal, the override signal causing the controlling of the acceleration to set a target acceleration of the control system to a value indicated by the override signal.

In the example method, the determining the safe acceleration state may comprise determining one of the reduced deceleration and the reduced acceleration of the set of safe acceleration states based on the planned acceleration.

In an example, an automotive control unit comprises at least one processing unit and a memory coupled to the at least one processing unit and configured to store machine-readable instructions. The machine-readable instructions cause the at least one processing unit to implement a control system configured to control an acceleration of a vehicle comprising a first set of control components having a first ASIL and a second set of control components having a second ASIL, the first ASIL being lower than the second ASIL. The machine-readable instructions cause the at least one processing unit to control the acceleration of the vehicle using the control system based on automotive sensor data obtained by one or more automotive sensors of the vehicle and a planned acceleration, detect an acceleration deviation caused by the first set of control components based on the based on automotive sensor data and determine a safe acceleration state using the second set of control components if the acceleration deviation is detected, wherein the safe acceleration state is selected from a set of safe acceleration states based on the automotive sensor data, the set comprising at least a maximum deceleration, a reduced deceleration and a reduced acceleration.

In the example automotive control unit, the machine-readable instructions may further cause the at least one processing unit to perform any one of the preceding example methods.

In an example, a vehicle comprises a plurality of automotive sensors, and the preceding example automotive control unit.

The preceding description has been provided to illustrate the provision of functional safety in longitudinal control systems. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

### List of Reference Signs

- 100: method
- 110-160: method steps
- 200: control system
- 210: acceleration control
- 211: target acceleration determination
- 212: acceleration divergence determination
- 220: torque control
- 221: acceleration-to-torque translation
- 222: brake torque multiplexer
- 223: safe torque determination
- 224: engine torque multiplexer
- 300: vehicle
- 310: automotive sensor
- 400: automotive control unit
- 410: CPU
- 420: GPU
- 420c: connection
- 430: automotive processing system
- 440: memory
- 450: removable storage
- 460: storage
- 470: cellular interface
- 480: GNSS interface
- 490: communications interface

## Claims

1. Method for performing an Automated Driving System -ADS- feature, the ADS feature enabling a vehicle to provide at least conditional driving automation, comprising:
controlling an acceleration of the vehicle using a control system based on automotive sensor data obtained by one or more automotive sensors of the vehicle and a planned acceleration, wherein the control system comprises a first set of control components having a first Automotive Safety Integrity Level -ASIL- and a second set of control components having a second ASIL, the first ASIL being lower than the second ASIL;
detecting an acceleration deviation caused by the first set of control components based on the automotive sensor data; and
if the acceleration deviation is detected, determining a safe acceleration state using the second set of control components, wherein the safe acceleration state is selected from a set of safe acceleration states based on the automotive sensor data, the set comprising at least a maximum deceleration, a reduced deceleration and a reduced acceleration.

2. The method of claim 1, wherein the planned acceleration indicates an acceleration to be performed by the vehicle during a planning horizon duration, the planned acceleration being determined, for each clock cycle of a system clock, by an acceleration determination module coupled to the control system.

3. The method of any one of the preceding claims, further comprising causing the vehicle to perform dynamic driving task - DDT- fallback.

4. The method of claim 3, wherein the causing the vehicle to perform DDT fallback comprises issuing a request to intervene to a fallback-ready user of the vehicle.

5. The method of any one of the preceding claims, further comprising causing the vehicle to achieve a minimal risk condition.

6. The method of any one of the preceding claims, wherein the controlling the acceleration comprises:
determining, for each clock cycle of a system clock of the vehicle, a target acceleration based on at least the planned acceleration and the automotive sensor data; and
translating the target acceleration into a brake torque and an engine torque.

7. The method of any one of the preceding claims, further comprising receiving an override signal, the override signal causing the controlling of the acceleration to set a target acceleration of the control system to a value indicated by the override signal.

8. The method of any one of the preceding claims, wherein the determining the safe acceleration state comprises determining one of the reduced deceleration and the reduced acceleration of the set of safe acceleration states based on the planned acceleration.

9. An automotive control unit (400), comprising:
at least one processing unit (410, 420, 430); and
a memory (440,450) coupled to the at least one processing unit (410, 420, 430) and configured to store machine-readable instructions,
wherein the machine-readable instructions cause the at least one processing unit (410, 420, 430) to implement a control system configured to control an acceleration of a vehicle comprising a first set of control components having a first Automotive Safety Integrity Level -ASIL- and a second set of control components having a second ASIL, the first ASIL being lower than the second ASIL, and
wherein the machine-readable instructions further cause the at least one processing unit (410, 420, 430) cause the at least one processing unit (410, 420, 430) to:
control the acceleration of the vehicle using the control system based on automotive sensor data obtained by one or more automotive sensors of the vehicle and a planned acceleration;
detect an acceleration deviation caused by the first set of control components based on the based on automotive sensor data; and
if the acceleration deviation is detected, determine a safe acceleration state using the second set of control components, wherein the safe acceleration state is selected from a set of safe acceleration states based on the automotive sensor data, the set comprising at least a maximum deceleration, a reduced deceleration and a reduced acceleration.

10. The automotive control unit (400) of claim 9, wherein the machine-readable instructions further cause the at least one processing unit (410, 420, 430) to perform the method of any one of claims 2 to 8.

11. A vehicle (300) comprising a plurality of automotive sensors and the automotive control unit (410, 420, 430) of any one of claims 9 and 10.
